# EUROPEAN PATENT SPECIFICATION

(11) **EP 0 536 694 B1**
(45) Date of publication and mention of the grant of the patent: **08.01.1997**
(21) Application number: 92117034.6
(22) Date of filing: 06.10.1992
(51) Int. Cl.: B60C 13/00, B60C 9/14

(54) **Vehicle tire**
Fahrzeugluftreifen
Bandage pneumatique pour véhicule

(30) Priority: 08.10.1991 IT TO910759
(43) Date of publication of application: 14.04.1993
(73) Proprietor: BRIDGESTONE/FIRESTONE, INC., Akron, Ohio 44317 (US)
(72) Inventor: Siegenthaler, Karl J., I-00100 Roma (IT)
(74) Representative: Jorio, Paolo

(56) References cited:
- EP-A- 0 005 399
- DE-A- 3 535 188
- DE-B- 1 039 382
- FR-A- 2 271 947
- FR-A- 2 320 197
- US-A- 3 542 108

## Description

The present invention relates to a vehicle tire, particularly for motor vehicles.

In particular, the present invention relates to a vehicle tire, particularly for motor vehicles, of the type disclosed in DE-A-3 535 188 and comprising an outer tread; two beads; two bead fillers; and two annular sidewall portions, each connecting a respective said bead to the tread; each sidewall portion comprising an inner reinforcing cord assembly defined by at least two first layers of reinforcing cords arranged on opposite sides, and extending substantially radially outwards, of said bead, and stiffening spacer means arranged between said two first layers; the two first layers defining therebetween a chamber housing said bead and said bead filler.

The tires on a motor vehicle form part of a system for damping the vibration transmitted to the vehicle by contact with the road surface. Moreover, inside the tire, certain parts, such as the tread and sidewall portions, i.e. the lateral portions of the tire connecting the tread to the bead portions, define specific shock absorbers capable of absorbing relatively low-frequency vibration. As regards the sidewall portions, an important point to bear in mind is that the rigidity of these portions affects, not only the ability of the tire to absorb varying, relatively low-frequency radial loads, but also the response of the tire to transverse loads.

In other words, by varying the rigidity of the sidewall portions, it is possible to vary the cornering capability of the tire.

It is an object of the present invention to provide a vehicle tire of the aforementioned type, particularly for motor vehicles, the sidewall portions of which are so designed as to enable the rigidity of the same to be varied cheaply and easily within a given range.

It is a further object of the present invention to provide a tire wherein said variation in the rigidity of the sidewall portions is achievable with substantially no change in the weight of the tire itself.

According to the present invention, there is provided a vehicle tire, particularly for motor vehicles, comprising an outer tread; two beads; two bead fillers; and two annular sidewall portions, each connecting a respective said bead to the tread; each sidewall portion comprising an inner reinforcing cord assembly defined by at least two first layers of reinforcing cords arranged on opposite sides, and extending substantially radially outwards, of said bead, and stiffening spacer means arranged between said two first layers; the two first layers defining therebetween a chamber housing said bead and said bead filler; characterised by the fact said stiffening spacer means are housed inside said chamber to fill a part thereof unoccupied by said bead and said bead filler; the spacer means extending substantially from said bead outwards for maintaining, at each point of said two first layers extending along said chamber, a given clearance proportional to the rigidity required, at that point, of the sidewall portion.

A number of non-limiting embodiments of the present invention will be described by way of example with reference to the accompanying drawings, in which:
Fig.1 shows a schematic partial cross section in perspective of a preferred embodiment of the tire according to the present invention;
Fig.2 shows the same view of a variation of the Fig.1 tire.

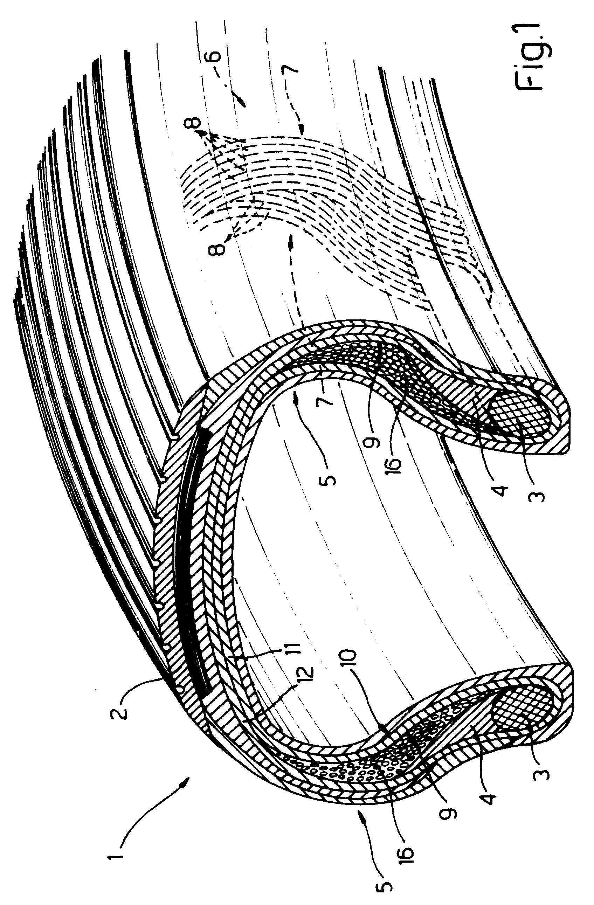

Number 1 in Fig.1 indicates a motor vehicle tire comprising, along the outer edge, a tread 2, and, close to the inner edge, two beads 3, each having a bead filler 4. Each bead 3 is connected to a lateral end of tread 2 by a respective sidewall portion 5 comprising an inner reinforcing cord assembly 6 defined by at least two layers 7 of reinforcing cords 8.

Cords 8 are wound about respective bead 3, are each connected to a corresponding cord 8 in the other layer 7, and extend substantially radially outwards of bead 3 to define an annular chamber 9 housing respective bead 3 and filler 4.

According to the preferred embodiment shown in Fig.1, cords 8 are the reinforcing cords of a tubular body ply 10 wound about beads 3 and fillers 4, and folded outwards to define an inner layer 11 and an outer layer 12 substantially contacting each other, and which define the two chambers 9 and are reinforced internally by layers 7.

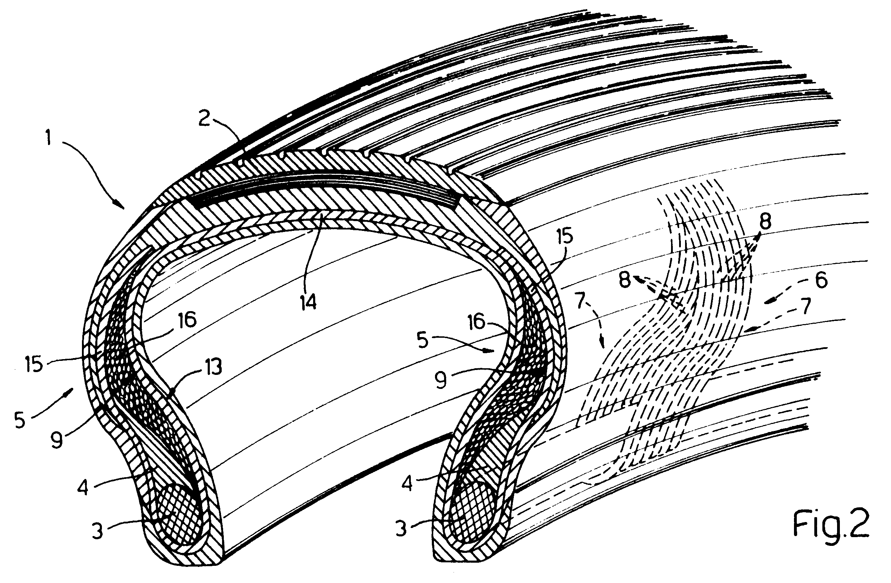

In the Fig.2 variation, cords 8 are the reinforcing cords of a body ply 13 comprising a first portion 14 extending between beads 3; and two second portions 15 extending in opposite directions outwards of respective beads 3, and turned up about beads 3 and fillers 4 to define respective annular chambers 9.

In each sidewall portion 5, reinforcing cords 8 in one of layers 7 constitute the inner reinforcing cord assembly of said first portion 14, while cords 8 in the other layer 7 constitute the inner reinforcing cord assembly of said second portion 15.

Each chamber 9 houses an annular spacer layer or element 16 made of relatively lightweight elastomeric sponge material, and located between layers 7 so as to fill the part of chamber 9 unoccupied by bead 3 and filler 4, and maintain, at each point of layers 7, a given clearance proportional to the rigidity required, at that point, of respective sidewall portion 5.

In view of the relatively lightweight material of spacer elements 16, these have substantially no effect on the weight of tire 1, while enabling the clearance at each point of layers 7 of each sidewall portion 5 to be varied as required within a given range, thus varying the moment of inertia and, consequently also, the flexural rigidity of sidewall portions 5.

## Claims

1. A vehicle tire (1), particularly for motor vehicles, comprising an outer tread (2); two beads (3); two bead fillers (4); and two annular sidewall portions (5), each connecting a respective said bead (3) to the tread (2); each sidewall portion (5) comprising an inner reinforcing cord assembly (6) defined by at least two first layers (7) of reinforcing cords (8) arranged on opposite sides, and extending substantially radially outwards, of said bead (3), and stiffening spacer means (16) arranged between said two first layers (7); the two first layers (7) defining therebetween a chamber (9) housing said bead (3) and said bead filler (4); whereby said stiffening spacer means (16) are housed inside said chamber (9) to fill a part thereof unoccupied by said bead (3) and said bead filler (4); characterised by said spacer means (16) extending substantially from said bead (3) outwards for maintaining, at each point of said two first layers (7) extending along said chamber (9), a given clearance proportional to the rigidity required, at that point, of the sidewall portion (5).

2. A tire as claimed in Claim 1, characterised by the fact that, for each said sidewall portion (5), said spacer means (16) comprise a second layer (16) of filler material located between said two first layers (7), and the thickness of each point of which is substantially equal to the clearance, at that point, between said two first layers (7), and proportional to the rigidity required, at that point, of said sidewall portion (5).

3. A tire as claimed in Claim 1 or 2, characterised by the fact that, in each said sidewall portion (5), the cords (8) in each said first layer (7) are wound about said bead (3) and each connected to a corresponding cord (8) in the other said first layer (7); said cords (8) defining the envelop of said chamber (9).

4. A tire as claimed in any one of the foregoing Claims, characterised by the fact that said cords (8) are the reinforcing cords of a body ply (13) comprising a first portion (14) extending between said two beads (3), and two second portions (15) extending in opposite directions outwards of said two beads (3); the reinforcing cords (8) of said first portion (14) being, in each sidewall portion (5), the cords (8) in one of said first layers (7); each second portion (15) being turned up into contact with the first portion (14); and the reinforcing cords (8) of each said second portion (15) being, in the respective sidewall portion (5), the cords (8) in the other of said first layers (7).

5. A tire as claimed in any one of the foregoing Claims from 1 to 3, characterised by the fact that said cords (8) are the reinforcing cords of a tubular body ply (10) wound about said beads (3) and said bead fillers (4), and folded outwards, as of said beads (3), to define an inner layer (11) and an outer layer (12) substantially contacting each other; the reinforcing cords (8) of said inner layer (11) and said outer layer (12) constituting, in each sidewall portion (5), the cords (8) of said two first layers (7).

6. A tire as claimed in any one of the foregoing Claims from 2 to 5, characterised by the fact that said second layer (16) is made of elastomeric sponge material.

## Patentansprüche

1. Fahrzeugluftreifen (1), insbesondere für Kraftfahrzeuge, umfassend
eine äußere Lauffläche (2), zwei Wülste (3), zwei Wulstfüller (4) und zwei ringförmige Seitenwandteile (5), die jeweils den entsprechenden Wulst mit der Lauffläche (2) verbinden, wobei jeder Seitenwandteil (5) einen inneren Verstärkungscord-Zusammenbau (6) umfaßt, der durch mindestens zwei erste Schichten (7) von Verstärkungscord (8) gebildet wird, die an gegenüberliegenden Seiten angeordnet sind und sich im wesentlichen vom Wulst (3) radial nach außen erstrecken, und wobei Versteifungsabstandsmittel (16) zwischen den beiden ersten Schichten (7) angeordnet sind und die beiden ersten Schichten (7) dazwischen eine Kammer (9) ausbilden, die den Wulst (3) und den Wulstfüller (4) aufnimmt, wobei die Versteifungsabstandsmittel (16) im inneren der Kammer (9) aufgenommen werden, um einen Teil von ihr auszufüllen, der nicht vom Wulst (3) und dem Wulstfüller (4) ausgefüllt wird, dadurch gekennzeichnet, daß sich die Abstandsmittel (16) im wesentlichen vom Wulst (3) nach außen erstrecken, um an jedem Punkt der sich entlang der Kammer (9) erstreckenden beiden ersten Schichten (7) ein vorgegebenes Freiraumpotential aufrechtzuerhalten, das für die Steifigkeit /Festigkeit an demjenigen Punkt des Seitenwandteils (5) erforderlich ist.

2. Luftreifen nach Anspruch 1, dadurch gekennzeichnet, daß für jeden Seitenwandabschnitt (5) die Abstandsmittel (16) eine zweite Schicht an Füllmaterial umfassen, das zwischen den zwei ersten Schichten (7) angeordnet ist, und wobei die Dicke an jedem Punkt von ihnen im wesentlichen dem Freiraum an demjenigen Punkt zwischen den beiden ersten Schichten (7) gleicht und zur erforderlichen Festig- oder Steifigkeit an demjenigen Punkt des Seitenwandabschnittes (5) proportional ist.

3. Luftreifen nach Anspruch 1 oder 2, dadurch gekennzeichnet, daß in jedem Seitenwandabschnitt (5) die Cords (8) in jeder ersten Schicht (7) um den Wulst (3) herumgewickelt sind und jeweils mit einem entsprechenden Cord (8) in der anderen ersten Schicht (7) verbunden sind, wobei die Cords (8) eine Umhüllung der Kammer (9) ausbilden.

4. Luftreifen nach irgendeinem der vorstehenden Ansprüche, dadurch gekennzeichnet, daß die Cords (8) Verstärkungscords einer Unterbaulage (13) sind, die einen ersten Abschnitt (14) umfassen, der sich zwischen den beiden Wülsten (3) erstreckt und wobei sich zwei zweite Abschnitte (15) in entgegengesetzten Richtungen von den beiden Wülsten (3) nach außen erstrecken, und wobei die Verstärkungscords (8) des ersten Abschnitts (14) in jedem Seitenwandabschnitt (5) und die Cords (8) in einer der ersten Schichten (7) sind, und daß jeder zweite Abschnitt (15) in Kontakt mit dem ersten Abschnitt (14) hochgeschlagen ist, und daß die Verstärkungscords (8) jedes zweiten Abschnitts (15) im entsprechenden Seitenwandabschnitt (5) die Cords (8) in der anderen der ersten Schichten (7) sind.

5. Luftreifen nach irgendeinem der vorstehenden Ansprüche 1 bis 3, dadurch gekennzeichnet, daß die Cords (8) Verstärkungscords einer schlauchförmigen Unterbaulage (10) sind, die um die Wülste (3) und die Wulstfüller (4) herumgewickelt und um die Wülste (3) nach außen herumgeführt sind, um eine innere Schicht (11) und eine äußere Schicht (12) auszubilden, die einander im wesentlichen berühren, wobei die Verstärkungscords (8) der inneren Schicht (11) und der äußeren Schicht (12) in jedem Seitenwandabschnitt (5) die Cords (8) der zwei ersten Schichten (7) darstellen.

6. Luftreifen nach einem der vorstehenden Ansprüche 2 bis 5, dadurch gekennzeichnet, daß die zweite Schicht (16) aus einem elastomeren Schaumstoffmaterial hergestellt ist.

## Revendications

1. Bandage pneumatique de véhicule (1), en particulier pour véhicules à moteur, comprenant une bande de roulement extérieure (2) ; deux talons (3) ; deux coins de talon (4) ; et deux éléments annulaires de cloison latérale (5), chacun reliant un respectif desdits talons (3) à la bande de roulement (2) ; chaque élément de cloison latérale (5) comprenant un ensemble intérieur de cordes d'armature (6) constitué par au moins deux premières couches (7) de cordes d'armature (8) disposées sur les côtés opposés, et orientées sensiblement radialement vers l'extérieur, dudit talon (3) et des moyens d'entretoisement de rigidification (16) disposés entre lesdites deux premières couches (7) ; lesdites deux premières couches (7) délimitant entre elles une chambre (9) logeant ledit talon (3) et ledit coin de talon (4) ; lesdits moyens d'entretoisement de rigidification (16) étant logés à l'intérieur de ladite chambre (9) afin d'emplir une partie de celle-ci qui n'est pas occupée par ledit talon (3) et ledit coin de talon (4) ; caractérisé en ce que lesdits moyens d'entretoisement (16) sont orientés sensiblement à partir dudit talon (3) vers l'extérieur afin de conserver, en chaque point desdites deux premières couches (7) disposées le long de ladite chambre (9), un jeu donné qui est proportionnel à la rigidité exigée de l'élément de cloison latérale (5) en ce point.

2. Bandage pneumatique selon la revendication 1, caractérisé par le fait que, pour chacun desdits éléments de cloison latérale (5), lesdits moyens d'entretoisement (16) comprennent une seconde couche (16) de matière de remplissage qui est placée entre lesdites deux premières couches (7) et dont l'épaisseur de chaque point est sensiblement égale au jeu séparant en ce point lesdites deux premières couches (7) et proportionnelle à la rigidité requise dudit élément de cloison latérale (5) en ce point.

3. Bandage pneumatique selon la revendication 1 ou 2, caractérisé par le fait que, dans chacun desdits éléments de cloison latérale (5), les cordes (8) situées dans chacune desdites premières couches (7) sont enroulées autour dudit talon (3) et chacune est reliée à une corde correspondante (8) de l'autre desdites premières couches (7) ; lesdites cordes (8) délimitant l'enveloppe de ladite chambre (9).

4. Bandage pneumatique selon l'une quelconque des revendications précédentes, caractérisé par le fait que lesdites cordes (8) sont des cordes d'armature d'un pli de corps (13) comprenant une première partie (14) disposée entre lesdits deux talons (3) et deux secondes parties (15) orientées en sens opposés vers l'extérieur desdits deux talons (3) ; les cordes d'armature (8) de ladite première partie (14) étant dans chaque élément de cloison latérale (5) les cordes (8) situées dans l'une desdites premières couches (7) ; chaque seconde partie (15) étant retournée vers le haut pour être mise en contact avec la première partie (14) ; et les cordes d'armature (8) de chacune desdites secondes parties (15) étant, dans l'élément respectif de cloison latérale (5), les cordes (8) situées dans l'autre desdites premières couches (7).

5. Bandage pneumatique selon l'une quelconque des revendications précédentes 1 à 3, caractérisé par le fait que lesdites cordes (8) sont les cordes d'armature d'un pli tubulaire de corps (10) enroulé autour desdits talons (3) et desdits coins de talon (4) et replié vers l'extérieur, notamment desdits talons (3), de manière à constituer une couche intérieure (11) et une couche extérieure (12) sensiblement en contact l'une avec l'autre ; les cordes d'armature (8) de ladite couche intérieure (11) et de ladite couche extérieure (12) constituant dans chaque élément de cloison latérale (5) les cordes (8) desdites deux premières couches (7).

6. Bandage pneumatique selon l'une quelconque des revendications précédentes 2 à 5, caractérisé par le fait que ladite seconde couche (16) est réalisée en matière élastomère alvéolaire.
